(19) **Europäisches Patentamt**
European Patent Office
Office européen des brevets

(11) **EP 1 895 156 A2**

(12) **EUROPÄISCHE PATENTANMELDUNG**

(43) Veröffentlichungstag:
05.03.2008 Patentblatt 2008/10

(51) Int Cl.:
*F03D 7/02* (2006.01)

(21) Anmeldenummer: 07010314.8

(22) Anmeldetag: 24.05.2007

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **19.08.2006 DE 102006039029**
**31.08.2006 DE 102006040970**

(71) Anmelder: **NORDEX ENERGY GmbH**
**22848 Norderstedt (DE)**

(72) Erfinder: **Kabatzke, Wolfgang, Dr.**
**21502 Geesthacht (DE)**

(74) Vertreter: **Hauck Patent- und Rechtsanwälte**
**Neuer Wall 41**
**20354 Hamburg (DE)**

(54) **Verfahren zum Betrieb einer Windenergieanlage**

(57)     Verfahren zum Betrieb einer Windenergieanlage mit einer Rotorblattwinkelsteuerung und einer Drehmomentensteuerung, wobei im Vollastbetrieb ab einer vorbestimmten Drehzahl ($n_{Absenkung}$) eine Momentenvorgabe durch die Drehmomentensteuerung derart abgesenkt wird, daß ein vorbestimmter Maximalwert für eine bereitgestellte Leistung (P) nicht überschritten wird.

Fig. 1

**Beschreibung**

Die Erfindung betrifft ein Verfahren zum Betrieb einer Windenergieanlage mit einer Rotorblattwinkelsteuerung und einer Drehmomentensteuerung.

Siegfried Heyer beschreibt in Windkraftanlagen, Systemauslegung, Netzintegration und Regelung, Teubner Verlag, 4. Auflage, Seite 321, im Vollastbetrieb einer Windenergieanlage durch Änderung eines Blatteinstellwinkels die Drehzahl der Turbine auf den Nennwert zu begrenzen. Ebenfalls erfolgt eine Regelung des Generatormoments, das die Anlagenleistung zu optimalen Werten regelt und die Anlage in sichere bzw. komponentenentlastende Betriebszustände führt.

Die abzugebende Leistung der Windenergieanlage (P) ist proportional zu dem Drehmoment (M) und der Drehzahl ($\Omega$). Der Zusammenhang lautet:

$$P = M \cdot \Omega.$$

Im Vollastbetrieb erfolgt bei Starkwind und bei Böen ein Ansteigen der Leistung. Dieses als "Überproduktion" bezeichnete Phänomen ist bei freistehenden Anlagen durchaus hinnehmbar, kann aber im Zusammenspiel mehrerer Windenergieanlagen, beispielsweise in einem Windpark, nicht hingenommen werden, da die Gefahr besteht, das Stromnetz zu überlasten.

Der Erfindung liegt die Aufgabe zugrunde, den Betrieb der Windenergieanlage zu führen, um mit einfachen Mitteln im Vollastbetrieb die abzugebende Leistung auf einen Maximalwert zu begrenzen.

Erfindungsgemäß wird die Aufgabe durch ein Verfahren gemäß Anspruch 1 gelöst. Vorteilhafte Ausgestaltungen bilden die Gegenstände der Unteransprüche.

Bei dem erfindungsgemäßen Verfahren erfolgt im Vollastbetrieb ab einer vorbestimmten Drehzahl ($n_{Absenkung}$) eine Absenkung der von der Drehmomentensteuerung bestimmten Momentenvorgabe. Die Absenkung erfolgt derart, daß ein vorbestimmter Maximalwert für eine bereitgestellte Leistung nicht überschritten wird. Im Vollastbetrieb wird üblicherweise eine Einstellung der Drehzahl der Turbine durch den Blatteinstellwinkel vorgenommen. Hierdurch kann bereits eine gewisse Steuerung im Vollastbereich erfolgen. Um jedoch ein Überschreiten eines maximal abzugebenden Leistungswerts auch bei steigender Drehzahl im Vollastbetrieb zu verhindern, wird ab einer vorbestimmten Drehzahl die Drehmomentenvorgabe reduziert. Bei einer reduzierten Drehmomentvorgabe gemäß dem oben angegebenen Zusammenhang zwischen Drehmoment und Leistung wird sich bei einer erhöhten Drehzahl eine verminderte Leistung einstellen. Dies ermöglicht es, die Leistung auch bei steigender Drehzahl zu begrenzen.

Um eine hohe Leistungsausbeute zu erzielen, hat es sich bei dem erfindungsgemäßen Verfahren als besonders vorteilhaft herausgestellt, als vorbestimmte Drehzahl zur Absenkung der Momentvorgabe nicht die Nenndrehzahl zu wählen, sondern einen etwas größeren Wert als die Nenndrehzahl. Mit diesem Wert für die vorbestimmte Drehzahl, ab der die Absenkung der Momentenvorgabe erfolgt, unterscheidet sich der Vollastbetrieb in zwei Abschnitte: In dem ersten dieser Abschnitte erfolgt ausschließlich eine Regelung des Blattanstellwinkels, während in dem zweiten Abschnitt sowohl eine Momentensteuerung als auch eine Steue-rung des Blattanstellwinkels erfolgt.

Bevorzugt wird für die vorbestimmte Drehzahl, ab der eine Absenkung der Momentenvorgabe erfolgt, ein Wert gewählt, der 0,5% bis 5% größer als die Nenndrehzahl ist.

Die Rotorblattwinkelsteuerung regelt jedoch zweckmäßigerweise die Blattwinkelanstellung bereits ab der Nenndrehzahl. Somit ergibt sich, daß eine Regelung für Drehzahlen zwischen der Nenndrehzahl und der vorbestimmten Drehzahl nur durch den Blattanstellwinkel erfolgt und ab der vorbestimmten Drehzahl sowohl durch die Blattanstellwinkelregelung als auch durch die Momentenvorgabe.

Bei dem erfindungsgemäßen Verfahren wird für den Maximalwert der bereitgestellten Leistung eine erste Momentenvorgabe bestimmt, die dem Moment bei der Leistung im Dauerbetrieb entspricht. Bevorzugt wird für den Maximalwert ebenfalls eine zweite Momentenvorgabe bestimmt, die der aktuellen Drehzahl entspricht, wobei der kleinere Wert von erster und zweiter Momentenvorgabe an der Momentensteuerung anliegt. Der Zusammenhang zwischen Momentenvorgabe und Drehzahl ist hierbei bevorzugt umgekehrt proportional, d.h. die Momentenvorgabe ist proportional zu dem Kehrwert der Drehzahl. Bezogen auf die bei der Betriebsführung der Windenergieanlage vorliegende Drehzahlwert, ist der hyperbolische Verlauf des Moments über der Drehzahl weitgehend durch eine Gerade angenähert.

Bei dem erfindungsgemäßen Verfahren gibt die Drehmomentensteuerung die Absenkung der Momentenvorgabe vor. Gleichzeitig erfolgt durch die Rotorblattwinkelsteuerung eine Steuerung der Drehzahl auf den vorbestimmten Drehzahlwert. Der von der Drehmomentensteuerung bestimmte Wert für die Momentenvorgabe entspricht einem vorgegebenen Maximalwert der Leistung.

Das erfindungsgemäße Verfahren wird nachfolgend anhand von zwei Figuren näher erläutert. Es zeigt:

Fig. 1    den Verlauf der Leistung über der Drehzahl und

Fig. 2    den Verlauf der Momentenvorgabe über der Drehzahl.

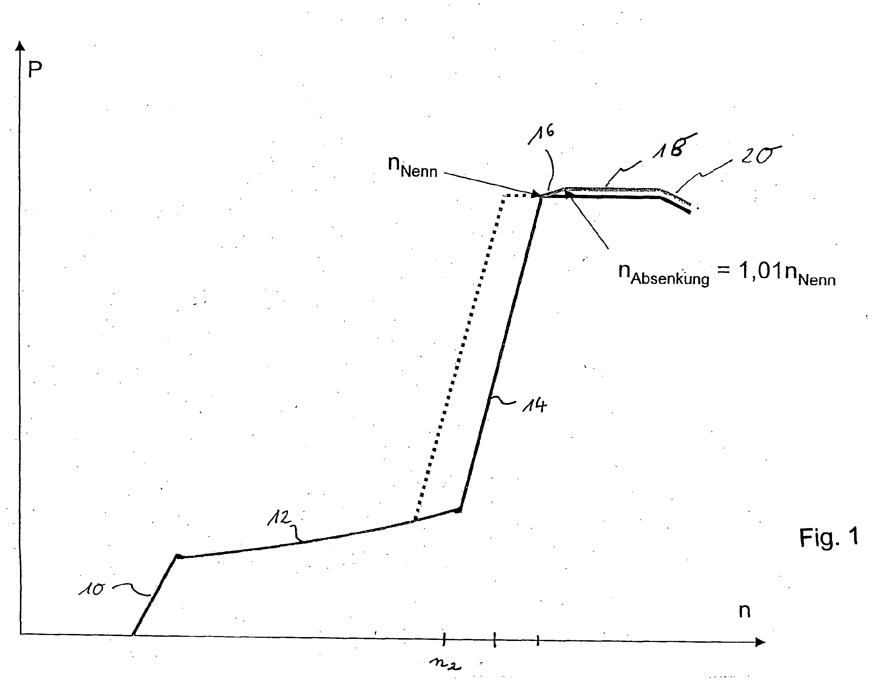

Zur allgemeinen Erläuterung sei zunächst das in Fig. 1 dargestellte Kennlinienfeld für das Regelverhalten der Windenergieanlage erläutert. Das Kennlinienfeld besitzt einen ersten Abschnitt 10, in dem die Wirkleistung P linear mit der Drehzahl steigt. Hieran schließt sich ein zweiter Abschnitt 12 an, in dem die Leistung nicht linear von der Drehzahl abhängt. Hier sind unterschiedliche Kurvenverläufe möglich. Bevorzugt wird im zweiten Kennlinienabschnitt 12 die Leistung entsprechend der aus dem Wind aufgenommenen Leistung $P_{Aero}$ geregelt. Der mathematische Zusammenhang zwischen Drehzahl und Leistung ergibt sich aus folgender Formel:

$$P_{Aero} = \left[ 2 \cdot \pi \cdot r_{rot} \cdot \frac{n_{gen}}{\ddot{u}_{getr}} \cdot \frac{1}{60} \cdot \frac{1}{\lambda(n_{rot})} \right]^3 \cdot \pi \cdot r_{rot}^2 \cdot \frac{\rho_{luft}}{2} \cdot c_p(n_{rot})$$

wobei $r_{rot}$ für den Radius des Rotorblatts steht, $n_{gen}$ für die Generatordrehzahl, $\ddot{u}_{getr}$ für das Übersetzungsverhältnis des Getriebes. $\lambda(n_{rot})$ bezeichnet die Schnellaufzahl des Rotors abhängig von der Drehzahl des Rotors, $\rho_{luft}$ bezeichnet die Dichte der Luft, während $C_p(n_{rot})$ ein Leistungsbeiwert für das Rotorblatt abhängig von der Drehzahl des Rotors beschreibt.

Ab einer Drehzahl $n_2$ wird die Windenergieanlage aus dem Teillastbereich in den Vollastbereich geführt. Hierzu wird die Drehzahl auf die Nenndrehzahl erhöht. Der Anstieg der Leistung erfolgt hierbei linear proportional zur Drehzahl entlang dem Abschnitt 14.

Ist die Nenndrehzahl erreicht, so schließt sich im Vollastbetrieb bis zur Drehzahlabsenkung ein weiterer Kennlinienabschnitt 16 an. In dem Kennlinienabschnitt 16 erhöht sich die Leistung linear proportional zu der Drehzahl. In dem darauf folgenden Kennlinienabschnitt 18 bleibt die Leistung über der Drehzahl konstant. In dem darauf folgenden Kennlinienabschnitt 20 fällt die Leistung wieder ab, um schließlich ab einer bestimmten Drehzahl vollständig zu entfallen.

Die Drehzahl, ab der die Leistung unabhängig von einer Drehzahlsteigerung konstant ist, beträgt in dem dargestellten Beispiel das 1,01-fache der Nenndrehzahl; liegt also 1 % über der Nenndrehzahl. Aufgrund dieser gegenüber der Nenndrehzahl erhöhten Drehzahl liegt die bereitgestellte Leistung 1 % über der Leistung, die sich für die Nenndrehzahl ergibt.

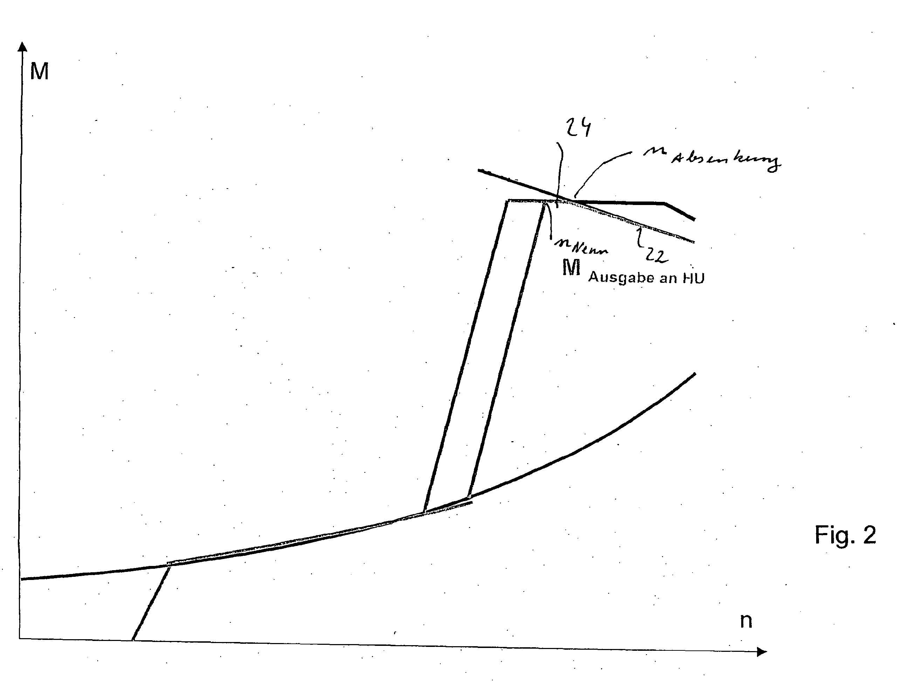

Der eingangs angesprochene Zusammenhang zwischen Leistung, Drehmoment und Drehzahl macht deutlich, daß bei steigender Drehzahl das Drehmoment abgesenkt werden muß, um eine konstante Leistung zu erzielen. Dieser Vorgang ist in Fig. 2 dargestellt. Fig. 2 zeigt den Drehmomentenverlauf der für den Hauptumrichter gemachten Drehmomentenvorgabe. Der Hauptumrichter gibt, beispielsweise bei doppelt gespeisten Asynchrongeneratoren, das Generatormoment vor. Im stationären Fall entspricht das Generatormoment dem vom Rotor eingetragenen Moment. Auch in Fig. 2 ist deutlich zu erkennen, wie im Vollastbetrieb bei Maximalmoment oberhalb der Nenndrehzahl das Moment zunächst konstant gehalten wird und nach einer Drehzahl $n_{Absenkung}$ in einen Abschnitt 22 fällt. Die Drehmomentvorgabe, aufgetragen über der Drehzahl, besitzt im Vollastbetrieb, also einen Abschnitt mit konstanter Momentenvorgabe 24 und einen Abschnitt mit fallender Momentenvorgabe 22. Der Übergang zwischen beiden Kurven erfolgt bei der Drehzahl $n_{Absenkung}$.

**Patentansprüche**

1.    Verfahren zum Betrieb einer Windenergieanlage mit einer Rotorblattwinkelsteuerung und einer Drehmomentensteuerung, wobei im Vollastbetrieb ab einer vorbestimmten Drehzahl ($n_{Absenkung}$) eine Momentenvorgabe durch die Drehmomentensteuerung derart abgesenkt wird, daß ein vorbestimmter Maximalwert für eine bereitgestellte Leistung (P) nicht überschritten wird.

2.    Verfahren nach Anspruch 1, **dadurch gekennzeichnet, daß** die vorbestimmte Drehzahl ($n_{Absenkung}$) zur Absenkung der Momentenvorgabe größer als die Nenndrehzahl ist.

3.    Verfahren nach Anspruch 2, **dadurch gekennzeichnet, daß** die vorbestimmte Drehzahl ($n_{Absenkung}$) um 0,5% bis 5% größer als die Nenndrehzahl ($n_{nenn}$)ist.

4. Verfahren nach einem der Ansprüche 1 bis 3, **dadurch gekennzeichnet, daß** die Rotorblattwinkelsteuerung den Rotorblattwinkel im Vollastbetrieb ab der Nenndrehzahl steuert.

5. Verfahren nach einem der Ansprüche 1 bis 4, **dadurch gekennzeichnet, daß** für den Maximalwert der bereitgestellten Leistung eine erste Momentenvorgabe bestimmt wird, die dem Moment bei der Leistung im Dauerbetrieb entspricht.

6. Verfahren nach Anspruch 5, **dadurch gekennzeichnet, daß** für den Maximalwert der bereitgestellten Leistung eine zweite Momentenvorgabe bestimmt wird, die der aktuellen Drehzahl entspricht, wobei der kleinere Wert von erster und zweiter Momentenvorgabe an der Momentensteuerung angelegt wird.

7. Verfahren nach einem der Ansprüche 1 bis 6, **dadurch gekennzeichnet, daß** die Rotorblattwinkelsteuerung die Drehzahl auf die bestimmte Drehzahl regelt und die Drehmomentensteuerung die Momentenvorgabe auf einen Wert regelt, der einem vorgegebenen Maximalwert der Leistungen entspricht.

$n_{Absenkung} = 1{,}01 n_{Nenn}$

$n_{Nenn}$

18

20

16

14

12

10

$n_2$

n

P

Fig. 1

Fig. 2

M Abstimmung

24

22

m Nenn

M Ausgabe an HU

n

M